# EUROPEAN PATENT SPECIFICATION

(11) **EP 3 004 009 B1**
(45) Date of publication and mention of the grant of the patent: **28.08.2019**
(21) Application number: 14732713.4
(22) Date of filing: 20.05.2014
(51) Int. Cl.: C03C 17/22, C03C 17/245, C03C 17/27, C03C 17/34

(54) **HEAT TREATABLE COATED ARTICLE WITH COPPER-DOPED ZIRCONIUM BASED LAYER(S) IN COATING**
WÄRMEBEHANDELBARER BESCHICHTETER ARTIKEL MIT KUPFERDOTIERTEN ZIRKONIUMLEGIERUNGSSCHICHTEN IN DER BESCHICHTUNG
ARTICLE REVÊTU APTE AU TRAITEMENT THERMIQUE COMPRENANT UNE OU PLUSIEURS COUCHES À BASE DE ZIRCONIUM DOPÉ AU CUIVRE PRÉSENTES DANS LE REVÊTEMENT

(30) Priority: 30.05.2013 US 201313905189
(43) Date of publication of application: 13.04.2016
(73) Proprietor: Guardian Glass, LLC, Auburn Hills MI 48326 (US)
(72) Inventor: Wang, Jiangping, Novi, MI 48377 (US); Barber, Jason, Ypsilanti, MI 48197 (US); Xu, Yongli, Plymouth, MI 48170 (US)
(74) Representative: Hoyng Rokh Monegier LLP
(86) International application number: PCT/US2014/038692
(87) International publication number: WO 2014/193690

(56) References cited:
- US-A- 5 635 245
- US-A1- 2006 057 294
- US-A1- 2007 254 164
- US-A1- 2012 114 878
- US-A1- 2012 164 461

## Description

This application is a continuation-in-part (CIP) of U.S. Application No. 13/760,239, filed February 6, 2013, the disclosure of which is hereby incorporated herein by reference.

This invention relates to a method of making a coated article to be used in a window unit or any other suitable application such as furniture glass, display case glass, picture frame glass, or the like. For example, certain embodiments of this invention relate to a method of making a coated article including a step of heat treating a glass substrate coated with at least a layer comprising zirconium (Zr) oxide and/or nitride doped with copper (Cu). Doping with copper (and similar phrases such as "copper-doped" and "doped with copper") includes both doping with copper and doping with copper plus other material such as copper oxide. Following heat treatment, the coated article includes a glass substrate supporting at least a layer comprising zirconium oxide doped with copper.

Optionally, a layer of or including diamond-like carbon (DLC) may be provided over the copper-doped zirconium based layer prior to heat treatment (HT). DLC may be used to generate energy during HT, e.g., due to its combustion during HT, for transforming at least another layer in the coating so as to form a new post-HT layer(s) (e.g., copper-doped zirconium oxide based layer) which may not have been present in that form before the HT. Optionally, a dielectric barrier layer of or including silicon nitride, silicon oxynitride, silicon oxide, or the like may be provided under the Zr-based layer so as to be located between at least the glass substrate and the Zr-based layer.

Certain other example embodiments of this invention relate to such a coated article, heat treated or not, which may be used in window applications, or any other suitable application such as furniture glass, display case glass, or the like.

### BACKGROUND OF THE INVENTION

Windows are known in the art. For example, conventional IG window units include at least first and second glass substrates (one of which may have a solar control coating on an interior surface thereof) that are coupled to one another via at least one seal(s) or spacer(s). The resulting space or gap between the glass substrates may or may not be filled with gas and/or evacuated to a low pressure in different instances. However, many IG units are required to be tempered. Thermal tempering of the glass substrates for such IG units typically requires heating the glass substrates to temperature(s) of at least about 580 or 600 degrees C for a sufficient period of time to enable thermal tempering.

Other types of coated articles also require heat treatment (HT) (e.g., tempering, heat bending, and/or heat strengthening) in certain applications. For example and without limitation, glass shower doors, glass table tops, and the like require HT in certain instances.

Diamond-like carbon (DLC) is sometimes known for its scratch resistant properties. For example, different types of DLC are discussed in the following U.S. Patents: 6,303,226, 6,303,225, and so forth, which are hereby incorporated herein by reference. It would sometimes be desirable to provide a window unit or other glass article with a protective coating including DLC in order to protect it from scratches and the like. Unfortunately, DLC tends to oxidize and burn off at temperatures of from approximately 350 degrees C (possibly from 380 to 400 degrees C) or higher, as the heat treatment is typically conducted in an atmosphere including oxygen. Thus, it will be appreciated that DLC alone as a protective overcoat cannot withstand heat treatments (HT) at the extremely high temperatures described above which are often required in the manufacture of vehicle windows, IG window units, glass table tops, tempered glass articles, and/or the like. Accordingly, DLC cannot be used alone as a coating to be heat treated, because it will oxidize during the heat treatment and substantially disappear as a result of the same (i.e., it will burn off).

Relevant background art is disclosed in document US 2012/0164461 A1**.** Herein a coated article includes a Zn-doped zirconium based layer before heat treatment. The coated article is heat treated sufficiently to cause the Zn-doped zirconium based layer to transform into a Zn-doped zirconium oxide based layer that is scratch resistant and/or chemically durable.

Further background art is disclosed in document US 2012/0114878 A1**.** Herein techniques are provided for making a coated article including an antibacterial and/or antifungal coating. The method includes forming two discrete layers of Zn and Zr or a layer including ZnₓZr_{y}N_{z} on a glass substrate and heat treating or thermally tempering, such that a single layer including ZnₓZr_{y}O_{z} is formed.

Certain other types of scratch resistant materials also are not capable of withstanding heat treatment sufficient for tempering, heat strengthening and/or bending of an underlying glass substrate.

Accordingly, those skilled in the art will appreciate that a need in the art exists for a method of making a scratch resistant coated article that is capable of being heat treated (HT) so that after heat treatment the coated article is still scratch resistant. A need for corresponding coated articles, both heat treated and pre-HT, also exists.

### BRIEF SUMMARY OF EXAMPLES OF INVENTION

In certain example embodiments of this invention, there is provided a method of making a coated article (e.g., furniture glass, shower door window, window such as for a vehicle or building, etc.) that is capable of being heat treated so that after being heat treated (HT) the coated article is scratch resistant to an extent more than uncoated glass.

In certain example embodiments of this invention, prior to heat treatment a coated article includes at least a layer(s) of or including copper-doped (e.g., copper doped and/or copper oxide doped) zirconium oxide and/or nitride on a glass substrate. This may be the only layer on the glass substrate in certain example embodiments, or alternatively other layers may be present. For instance, one or more layers of or including diamond-like carbon (DLC) may be present on the glass substrate over at least the copper-doped zirconium based layer. As another example, a dielectric barrier layer may be present between the glass substrate and the copper-doped zirconium based layer. Heat treatment (e.g., thermal tempering) of the coated article causes the copper-doped zirconium based layer to transform into a layer of or including copper-doped zirconium oxide that can be used for scratch resistant and/or corrosion resistant purposes.

Surprisingly, it has been found that the addition of copper (Cu) (e.g., doping with either pure copper or copper oxide) to the zirconium based layer improves the scratch resistance of the layer following heat treatment, compared to if the copper is not present. Unexpectedly, it has been found that the addition of the copper (Cu) to the zirconium based layer remarkably improves the scratch resistance of the layer, before and/or after heat treatment, compared to a pure zirconium oxide coating on a glass substrate, and also compared to a pure copper oxide coating on a glass substrate. Furthermore, it has been unexpectedly found that the addition of the copper (Cu) to the zirconium based layer improves the corrosion resistance of the coated article, before and/or after heat treatment. Thus, a coated article with improved scratch resistance (SR) and improved corrosion resistance/chemical stability is provided.

In certain example instances, that are not limiting, the copper-doped zirconium oxide inclusive layer following heat treatment may be buffed or surface treated in order to improve scratch resistance thereof. Moreover, the zirconium inclusive layer may additionally be doped with other materials such as carbon in certain example non-limiting instances.

In certain example embodiments, an optional layer of or including diamond-like carbon (DLC) may be provided on the glass substrate over at least the Cu-doped zirconium inclusive layer prior to heat treatment, for purposes of protecting the Cu-doped zirconium inclusive layer prior to heat treatment (HT). In certain example embodiments, the DLC may be hydrogenated. The HT causes the layer comprising Cu-doped zirconium oxide and/or nitride to be transformed into a new post-HT layer comprising Cu-doped zirconium oxide, and optionally causes any optional DLC layer to burn off or combust. During HT, the optional DLC layer(s) will be oxidized and burn off, however, the new post-HT layer may contain some residual carbon. The new post-HT layer comprising Cu-doped zirconium oxide may also include nitrogen in certain example embodiments of this invention.

In certain example embodiments, at least prior to heat treatment, the layer(s) comprising or consisting essentially of Cu-doped zirconium oxide and/or nitride may also be doped with fluorine (F) and/or carbon (C).

The new post-HT layer comprising Cu-doped zirconium oxide is very scratch resistant. Thus, it can be seen that a technique has been provided which allows for a heat treatable scratch resistant product which is also corrosion resistant; and the coated article may also have good transmission properties.

In certain example embodiments of this invention, there is provided In example embodiments of this invention, there is provided a method of making a heat treated coated article, the method comprising: having a coated article including a coating supported by a glass substrate, the coating comprising a copper-doped layer comprising an oxide and/or nitride of zirconium, and wherein the copper-doped layer is substantially free of tungsten and zinc; and thermally tempering the coated article, including the glass substrate and the copper-doped layer comprising an oxide and/or nitride of zirconium, so that after the tempering a layer comprising copper-doped zirconium oxide is provided on the glass substrate.

### BRIEF DESCRIPTION OF THE DRAWINGS

FIGURE 1 is a schematic diagram illustrating cross-sections of coated articles according to an embodiment of this invention before and after heat treatment.
FIGURE 2 is a schematic diagram illustrating cross-sections of coated articles according to an embodiment of this invention before and after heat treatment.
FIGURE 3 is a schematic diagram illustrating cross-sections of coated articles according to an embodiment of this invention before and after heat treatment.
FIGURE 4 shows a process of making a coated article on the left side of any of Figs. 1-3, including sputtering copper (and/or copper oxide) in a direction angled relative to a sputtering direction of zirconium according to an example embodiment of this invention.
FIGURE 5 shows a process of making a coated article on the left side of any of Figs. 1-3, including power-controlled co-sputtering from both zirconium (or zirconium oxide) and copper (or copper oxide) targets according to an example embodiment of this invention.
FIGURE 6 shows a process of making a coated article on the left side of any of Figs. 1-3, including sputtering at least copper and zirconium from a Zr/Cu alloy target according to an example embodiment of this invention.
FIGURE 7 shows a process of making a coated article on the left side of Fig. 8, including sputter-depositing layers from at least copper and zirconium based targets, according to an example embodiment of this invention.
FIGURE 8 is a schematic diagram illustrating cross-sections of coated articles according to an embodiment of this invention before and after heat treatment.

### DETAILED DESCRIPTION OF EXAMPLE EMBODIMENTS OF THE INVENTION

Referring now more particularly to the accompanying drawings in which like reference numerals indicate like parts or layers throughout the several views.

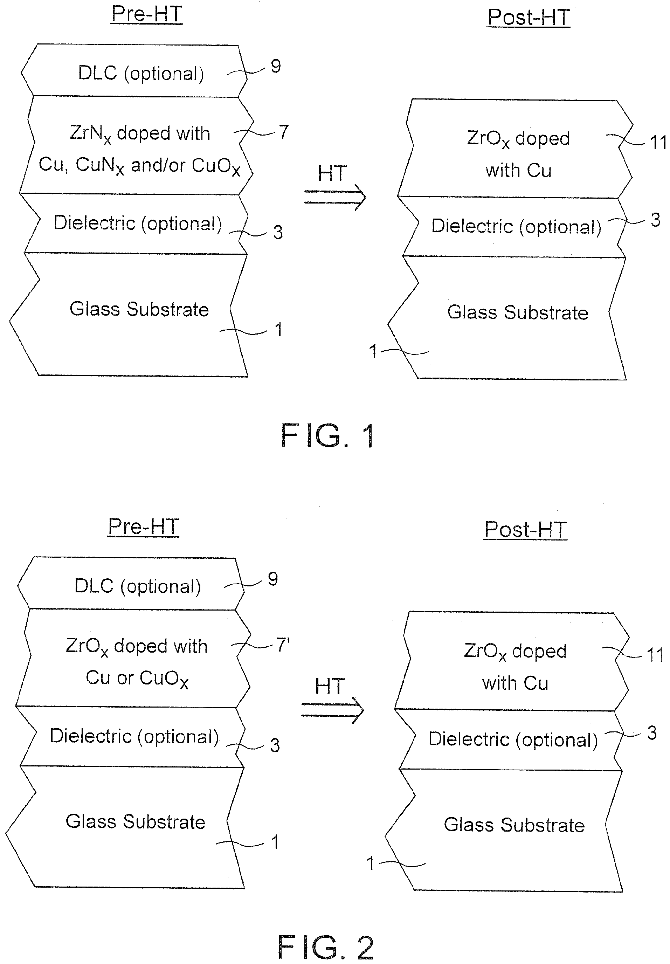

Referring to Figs. 1-3, in certain example embodiments of this invention, prior to heat treatment a coated article includes at least one layer(s) 7, 7' 7" of or including copper-doped zirconium oxide and/or nitride on a glass substrate 1. Copper doping of the zirconium oxide, zirconium oxynitride, or zirconium nitride layer (7, 7' or 7') may be in the form of doping with copper (Cu), copper oxide, copper oxynitride, or the like in example embodiments of this invention. Doping with copper (and similar phrases such as "copper-doped", "Cu-doped" and "doped with copper") includes both doping with copper and doping with copper plus other material such as copper oxide and/or copper nitride. Thus, "copper-doped", "Cu-doped", and other similar phrases as used herein mean doped with at least copper and thus include at least doping with one or more of: copper, copper oxide, copper nitride, and/or copper oxynitride.

The copper-doped layer 7, 7', 7", 11 may be the only layer on the glass substrate 1 in certain example embodiments, or alternatively other layers may be present. For instance, one or more layers 9 of or including diamond-like carbon (DLC) may be present on the glass substrate over at least the copper-doped zirconium based layer prior to heat treatment in certain instances. As another example, a dielectric barrier layer(s) 3 may be present between the glass substrate 1 and the copper-doped zirconium based layer 7, 7' 7" before and/or after heat treatment. In addition to layer 7, 7', 7", one or both of layers 3, 9 may be present. Heat treatment (e.g., thermal tempering) of the coated article causes the copper-doped zirconium based layer 7, 7', 7" to transform into a layer of or including copper-doped zirconium oxide 11 that can be used for scratch resistant and/or corrosion resistant purposes. In certain example embodiments, the top layer 11 of the coating following heat treatment consists essentially of copper-doped zirconium oxide (e.g., Cu:ZrOₓ) which is both scratch resistant (SR) and corrosion resistant. Layer 11 may also include small amounts of other materials such as one or more of nitrogen, carbon, or the like. Other layer(s), in addition to the copper-doped zirconium based layer post-HT, may or may not be provided in different example embodiments of this invention.

Surprisingly, it has been found that the addition of the copper (Cu) to the zirconium based layer remarkably improves the scratch resistance of the layer, compared to if the copper is not present. Unexpectedly, it has been found that the addition of the copper to the zirconium based layer remarkably improves the scratch resistance of the layer, before and/or after heat treatment, compared to a pure zirconium oxide coating on a glass substrate, and also compared to a pure copper oxide coating on a glass substrate. Furthermore, it has been unexpectedly found that the addition of the copper to the zirconium based layer improves the corrosion resistance of the coated article, before and/or after heat treatment. Thus, a coated article with improved scratch resistance (SR) and improved corrosion resistance/chemical stability is provided. Accordingly, a transparent lubricious coating is provided for glass and ceramic substrates, comprising Zr, Cu and oxygen with scratch resistance better than that of pure zirconium oxide.

Accordingly, there is provided a heat treatable scratch-resistant coating. For example, the scratch resistance of the coating may reach from about 20-35 lbs., more preferably from about 25-30 lbs., when measured with a 3 mm borosilicate glass sphere, in certain example embodiments. High performance of the composite coating may be contributed by zirconium oxide (e.g., ZrO₂) alloyed with Cu and/or CuOₓ. Copper (Cu) and zirconium (Zr) may be cosputtered onto the substrate, directly or indirectly, with or without a thin barrier layer 9 therebetween via a magnetron sputtering process in certain example embodiments. Inert gas such as argon, as well as reactive gas such as oxygen and/or nitrogen, may be used during the sputtering. In certain example embodiments, with respect to metal content of the layer, the Cu content of layer 7, 7', 7" and/or 11 may be from about 1-50%, more preferably from about 5-30%, and most preferably from about 5-15%. Doping with copper may be controlled by target angle (e.g., from about 15-45 degrees relative to the vertical and/or relative to the angle of the Zr inclusive target), and/or power (e.g., 50 to 500W). After heat treating (e.g., thermal tempering), the coating is oxidized to form layer 11 which is of or including zirconium oxide doped with copper. In certain example embodiments, the Cu doping in the zirconium oxide (e.g., ZrO₂) matrix may behave as a solid lubricant.

In certain example embodiments of this invention, the copper-doped zirconium based layer 7, 7', 7" may be of or include one or more of: Cu-doped ZrOₓ (e.g., ZrO₂), Cu-doped ZrNₓ, Cu-doped ZrOₓN_{y}, or mixtures thereof, prior to heat treatment. The copper may or may not be oxided and/or nitrided in the layer 7, 7', 7" before HT. In certain embodiments, the heat treatment (HT) may involve heating a supporting glass substrate 1, with at least the Cu-doped zirconium based layer(s) 7, 7', 7" thereon, using temperature(s) of from 550 to 800 degrees C, more preferably from 580 to 800 degrees C (which is well above the burn-off temperature of the optional DLC). The high temperature developed during the HT heats the Cu-doped zirconium based layer(s) 7, 7', 7" and causes the layer to transform into the Cu-doped zirconium oxide based layer 11 as a result of the HT. The copper may or may not be oxided and/or nitrided in the Cu-doped layer 11 after HT. It is also noted that fluorine and/or carbon may also optionally be present in the final post-HT layer 11 in certain example embodiments. In certain example embodiments, the layers 7, 7', 7" and 11 may be free of, or substantially free of (no more than 3% of, more preferably no more than 1.0% of, and most preferably no more than 0.5% of) zinc (Zn). In certain example embodiments, the layers 7, 7', 7" and 11 may be free of, or substantially free of (no more than 3% of, more preferably no more than 1.0% of, and most preferably no more than 0.5% of) other metals such as Zn, W, and the like.

In certain example embodiments of this invention, the post-HT layer(s) 11 comprising or consisting essentially of Cu-doped zirconium oxide includes a nanocrystalline cubic lattice structure and/or a crystalline or nanocrystalline tetragonal lattice structure. It is noted that "consisting essentially of' means that the layer contains no material amount of any material other than the recited elements. For example, a layer 11 "consisting essentially of' Cu-doped zirconium oxide contains no material amount of any element other than copper, zirconium, nitrogen and oxygen. As another example, a layer 7, 7', 7" and/or 11 having a metal portion "consisting essentially of" Cu and Zr contains no material amount of any metal other than copper and zirconium (although various amounts of non-metals such as oxygen, nitrogen and/or carbon may be present).

The entire layer(s) 11 may be of a nanocrystalline cubic lattice structure type and/or tetragonal lattice structure type, or alternatively only part of the layer(s) 11 may include nanocrystalline cubic lattice structure and/or tetragonal lattice structure post-HT. Prior to HT, the Cu-doped zirconium inclusive layer 7, 7', 7" need not have a nanocrystalline cubic and/or tetragonal lattice structure. Thus, it will be appreciated that the HT may cause the Cu-doped zirconium based layer 7, 7', 7" to transform into a Cu-doped zirconium oxide based layer 11 having a nanocrystalline cubic lattice structure and/or crystalline tetragonal lattice structure. In certain example embodiments, as a result of the HT, the amount of oxygen in the post-HT zirconium inclusive layer(s) 11 is higher than the amount of oxygen in the pre-HT zirconium inclusive layer(s) 7, 7', 7". Instead of a nanocrystalline cubic lattic structure, it is optional that post-HT layer(s) 11 comprising Cu-doped zirconium oxide may include a nanocrystalline tetragonal structure (e.g., cubic may be replaced with tetragonal in any embodiment herein).

In certain example embodiments of this invention, there is more Zr than Cu in the Cu-doped zirconium oxide based layers 7, 7', 7" and 11. Thus, each such layer 7, 7', 7", 11 is said to be Cu-doped. In certain example embodiments of this invention, the Cu-doped zirconium based layer (e.g., Cu:ZrOₓ, Cu:ZrNₓ, Cu:ZrOₓN_{y}, Cu:ZrBₓ, and/or Cu:ZrCₓ) may contain less than 50% Cu (relative to the metal content of the layer which is/may be made up of Cu + Zr). Note that the percentages (%) herein are atomic percentages (atomic %).

The metal content of layers 7, 7', 7", 11 may be from about 1-50% Cu in certain example embodiments of this invention, more preferably from about 2-40% Cu, even more preferably from about 2-30% Cu, even more preferably from about 5-30% Cu, and most preferably from about 5-15% Cu (atomic %). The remainder of the metal content of the layers 7, 7', 7" and 11 may be made up of Zr, although small amounts of other elements may be added. The metal content of layers 7, 7', 7", 11 may be from about 51-99% Zr in certain example embodiments of this invention, more preferably from about 52-97% Zr, even more preferably from about 70-95% Zr, even more preferably from about 85-95% Zr (atomic %). For purposes of example, with respect to metal content, a Cu:ZrOₓ layer 11 containing about 15% Cu has about 85% Zr, and is also oxided as discussed herein (i.e., oxygen is not included in the metal content). In certain example embodiments of this invention, the Zr:Cu ratio in the Cu-doped zirconium based layer 7, 7', 7", 11 may be from about 50:1 to 1:1, more preferably from about 40:1 to 1.5:1, even more preferably from about 20:1 to 4:1, and still more preferably from about 10:1 to 5:1.

Moreover, in certain example embodiments of this invention, the Cu-doped zirconium based layers 7, 7' 7" and 11 may be from about 1 to 250 nm thick, more preferably from about 1 to 100 nm thick, and most preferably from about 5 to 50 nm thick in certain example embodiments of this invention, when high transmission is desired. An example thickness is about 300 angstroms (same as 30 nm). In certain example embodiments of this invention, before and/or after HT, coated articles herein have a visible transmission of at least about 50%, more preferably at least about 60%, and possibly at least about 70% or 75%.

In certain example embodiments, at least prior to heat treatment, one or more of the Cu-doped zirconium based layers 7, 7', 7", 11 may also be doped with fluorine (F) and/or carbon (C). This may be done, for example, by using at least gas such as C₂F₆ (e.g., in addition to gases such as argon and oxygen) during sputter-deposition of the Cu-doped zirconium based layer 7, 7', 7". Of course, following heat treatment the Cu-doped zirconium oxide based layer 11 may also be doped with F and/or C in a corresponding or substantially corresponding manner since it was present before HT. This doping with F and/or C may be used in conjunction with any embodiment discussed herein.

The Cu-doped zirconium based layer 7, 7', 7" may be deposited on the glass substrate (including optionally over a dielectric or other type of barrier layer(s) 3) by any suitable technique including but not limited to PVD and CVD. Sputter deposition is appropriate in certain example instances. The coating may be used in in-deposited form (i.e., no tempering or the like), but it may often be heat treated at the high temperatures discussed herein (e.g., for tempering, heat bending and/or heat strengthening) to densify the Cu-doped zirconium based layer and reduce its absorption. The coating may be heat treated in a standard furnace used to temper glass in certain example instances. If, for example, the coated article is to be used in its as-deposited form, the Cu-doped zirconium based layer 7, 7', 7" may be deposited using a mixed copper and zirconium metal or ceramic sputtering target, or alternatively may be formed by merging single copper and zirconium sources (e.g., co-sputtering a Cu or Cu oxide target, and a Zr or Zr oxide target). If, for example, the coated article is to be used following HT, it can be made in a similar manner except that HT is used, or alternatively it can be made from discrete Cu and Zr containing layers and the mixed Cu:Zr oxide 11 following HT may be formed by diffusion which occurs during the HT. Optionally, a sacrificial layer 9 comprising carbon or DLC may be provided on the glass substrate over the Cu-doped zirconium based layer 7, 7', 7" for mechanical protection prior to HT (this carbon inclusive layer 9 typically burns off during HT).

Fig. 1 is a schematic diagram illustrating how a coated article can be made according to another example embodiment of this invention. Initially, a coated article is formed and includes a glass substrate 1. The coated article includes, supported by glass substrate 1, at least one optional dielectric barrier layer 3 of or including silicon nitride, silicon oxynitride, silicon oxide, or the like; at least one layer of or including Cu-doped zirconium nitride 7 (e.g., Cu:ZrN and/or any suitable stoichiometry where the Cu may or may not be nitrided and/or oxided), and an optional top layer of or including DLC 9.

Glass substrate 1 is typically of or includes soda-lime-silica glass, although other types of glass may be used in certain instances. Dielectric layer(s) 3 is provided in order to prevent or reduce sodium diffusion into the Cu-doped zirconium based layer 7 during HT (i.e., a diffusion barrier). Any of the aforesaid barrier layer 3 materials may be doped (e.g., 0.5 to 15%) with Al, stainless steel, or any other metal(s) in certain embodiments of this invention. Barrier layer(s) 3 is formed on the glass substrate 1 via sputtering, or via any other suitable technique. Dielectric barrier layer 3 may be from about 50 to 900 Å thick in certain example embodiments of this invention, more preferably from about 80-700 Å thick, and most preferably from about 100 to 400 Å thick (e.g., about 150 angstroms thick).

The layer 9 comprising DLC formed on the glass substrate 1 may be of any suitable type of DLC, including but not limited to any of the DLC types described in any of U.S. Patent Nos. 6,592,993; 6,592,992; 6,531,182; 6,461,731; 6,447,891; 6,303,226; 6,303,225; 6,261,693; 6,338,901; 6,312,808; 6,280,834; 6,284,377; 6,335,086; 5,858,477; 5,635,245; 5,888,593; 5,135,808; 5,900,342; and/or 5,470,661, all of which are hereby incorporated herein by reference. For purposes of example only, DLC inclusive layer(s) 9 may be from about 5 to 1,000 angstroms (Å) thick in certain example embodiments of this invention, more preferably from 10-300 Å thick, and most preferably from 25 to 50 Å thick. In certain example embodiments of this invention, DLC layer(s) 9 may have an average hardness of at least about 10 GPa, more preferably at least about 20 GPa, and most preferably from about 20-90 GPa. Such hardness renders layer 9 resistant to scratching, certain solvents, and/or the like, before the sacrificial layer 9 burns off during HT. Layer 9 may, in certain example embodiments, be of or include a special type of DLC known as highly tetrahedral amorphous carbon (t-aC), and may be hydrogenated (t-aC:H) in certain embodiments. In certain hydrogenated embodiments, the t-aC:H type of DLC 9 may include from 4 to 39% hydrogen, more preferably from 5-30% H, and most preferably from 10-20% H. This t-aC or t-aC:H type of DLC for layer(s) 9 may include more sp³ carbon - carbon (C - - C) bonds than sp² carbon - carbon (C - - C) bonds. In certain example embodiments, at least about 50% of the carbon-carbon bonds in DLC layer 9 may be sp³ type carbon - carbon (C - - C) bonds, more preferably at least about 60% of the carbon-carbon bonds in the layer(s) may be sp³ carbon - carbon (C - - C) bonds, and most preferably at least about 70% of the carbon-carbon bonds in the layer(s) may be sp³ carbon - carbon (C - - C) bonds. In certain example embodiments of this invention, the DLC in layer 9 may have an average density of at least about 2.4 gm/cm³, more preferably at least about 2.7 gm/cm³. Example linear ion beam sources that may be used to deposit DLC inclusive layer 9 on substrate 1 over the layers 3 and 7 include any of those in any of U.S. Patent Nos. 6,261,693, 6,002,208, 6,335,086, or 6,303,225 (all incorporated herein by reference). When using an ion beam source to deposit layer 9, hydrocarbon feedstock gas(es) (e.g., C₂H₂), HMDSO, or any other suitable gas, may be used in the ion beam source in order to cause the source to emit an ion beam toward substrate 1 for forming layer 9. It is noted that the hardness and/or density of layer 9 may be adjusted by varying the ion energy of the depositing apparatus. In certain example embodiments, at least about 2,000 V (anode to cathode volts), e.g., about 3,000 V, may be used in the ion source in depositing layer 9. It is noted that the phrase "on the substrate" as used herein is not limited to being in direct contact with the substrate as other layer(s) may still be provided therebetween.

Cu-doped zirconium nitride inclusive layer 7 is provided on the glass substrate 1, and optionally between DLC layer 9 and dielectric barrier layer 3 in the Fig. 1 embodiment. In certain example embodiments, Cu-doped zirconium nitride inclusive layer 7 may be located directly between DLC layer 9 and barrier layer 3 so as to contact each of them; however in other example embodiments other layer(s) (not shown) may be provided therebetween. The Cu-doped zirconium nitride inclusive layer 7 may consist essentially of copper, zirconium and nitride, or alternatively may include other materials including but not limited to oxygen and/or dopants such as Al, F, C or the like. Cu-doped zirconium nitride inclusive layer 7 may be formed by sputtering or the like in certain example embodiments of this invention. In certain example embodiments of this invention, the Cu-doped zirconium nitride of layer 7 may possibly be represented by Cu doped ZrₓN_{y}, where the ratio x:y is from about 0.5 to 1.3, more preferably from about 0.8 to 1.2, and may be about 1.0 in certain example embodiments (the Cu may also be oxided and/or nitrided in the layer 7).

Once the pre-HT coated article shown on the left side of Fig. 1 is formed, it may or may not be subjected to heat treatment sufficient for at least one of heat bending, thermal tempering, and/or heat strengthening. Referring to Fig. 1, when subjected to HT (e.g., in a furnace using temperature(s) of from 550 to 800 degrees C, more preferably from 580 to 800 degrees C), the upper or outer DLC inclusive layer 9 burns off due to combustion because of the high temperatures used during HT. The high temperature heats the layer 7 comprising Cu-doped zirconium nitride to a temperature(s) sufficient to cause the layer to densify and increase its visible transmission by decreasing its absorption. Because the layer comprising Cu-doped zirconium nitride 7 is heated to such a high temperature during HT in an environment containing oxygen, the layer 7 is transformed during the HT into a new post-HT layer comprising or consisting essentially of Cu-doped zirconium oxide 11. The new post-HT layer comprising Cu-doped zirconium oxide 11 may also include nitrogen (and/or other dopants) in certain example embodiments of this invention. The new post-HT layer comprising Cu-doped zirconium oxide 11 (optionally with nitrogen) is scratch resistant thereby providing a heat treated scratch resistant coated article. It is noted that the phrase "zirconium oxide" as used herein includes ZrO₂ and/or any other stoichiometry where Zr is at least partially oxided. The post-HT layer comprising Cu-doped zirconium oxide 11 may include from 0-30% nitrogen in certain example embodiments of this invention, more preferably from 0-20% nitrogen, even more preferably from 0-10% nitrogen, and possibly from about 1-5% nitrogen in certain example embodiments of this invention (atomic %). In certain example embodiments of this invention, the post-HT layer comprising Cu-doped zirconium oxide 11 includes a nanocrystalline cubic lattice or tetragonal structure (although the pre-HT layer comprising Cu-doped zirconium nitride need not in certain instances). In certain example embodiments of this invention, the heat treated layer 11 comprising Cu-doped zirconium oxide includes Cu:ZrₓO_{y}, wherein y/x is from about 1.2 to 2.5, more preferably from about 1.4 to 2.1. As explained above, it has been found that the addition of the copper (Cu) to the zirconium based layer 7, 7', 7", 11 remarkably improves the scratch resistance of the layer following heat treatment, compared to if the Cu is not present.

The final HT (or even the non-HT) coated article of Fig. 1 is scratch resistant and may be used in various applications, including but not limited to IG window units, furniture glass, shower door windows, laminated vehicle windshields, other types of vehicle windows, display glass, and/or the like.

Fig. 2 illustrates another example embodiment according to this invention. The Fig. 2 embodiment is the same as the Fig. 1 embodiment described above, except that pre-HT Cu-doped zirconium nitride layer 7 of the Fig. 1 embodiment has been replaced with a Cu-doped zirconium oxide layer 7' in the Fig. 2 embodiment. The thicknesses, Zr contents, Cu contents, ratios, etc. discussed above with respect to layer 7 also apply to layer 7' in the Fig. 2 embodiment. In other words, the Fig. 2 embodiment is the same as the Fig. 1 embodiment except that the nitrogen in layer 7 has been replaced (or supplemented) with oxygen. Regarding the layer 7' of or including Cu-doped ZrOₓ in Fig. 2, "x" may be from about 1 to 2 in certain example embodiments of this invention, more preferably from about 1 to 1.9. The zirconium oxide based layer 7' in the Fig. 2 embodiment, which is Cu-doped as discussed herein, may or may not also include nitrogen. The post-HT layer 11 in the Fig. 2 embodiment is essentially the same as that described above with respect to the Fig. 1 embodiment. This is because the HT causes both Cu-doped ZrOₓ (see 7' in Fig. 2) and Cu-doped ZrNₓ (see 7 in Fig. 1) to transform into a more dense and less absorbing Cu-doped ZrOₓ top layer 11 as shown in Figs. 1-2.

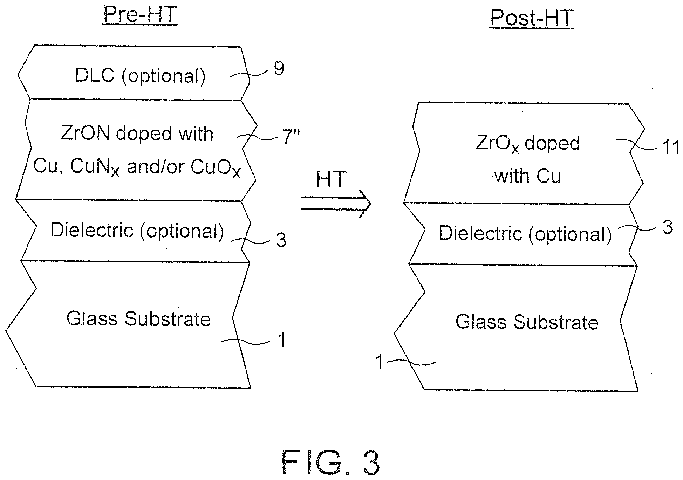

Fig. 3 illustrates another example embodiment according to this invention. The Fig. 3 embodiment is the same as the Fig. 1 embodiment described above, except that pre-HT Cu-doped zirconium nitride layer 7 of the Fig. 1 embodiment has been replaced with a Cu-doped zirconium oxynitride layer 7" in the Fig. 3 embodiment. The thicknesses, Zr contents, Cu contents, ratios, etc. discussed above also apply to layer 7" in the Fig. 3 embodiment. In other words, the Fig. 3 embodiment is the same as the Fig. 1-2 embodiments except that the layer 7" is of or includes Cu-doped zirconium oxynitride, where the Cu may or may not be oxided and/or nitrided. The post-HT layer 11 in the Fig. 3 embodiment is essentially the same as that described above with respect to the Fig. 1-2 embodiments. This is because the HT causes both Cu-doped ZrOₓ (see 7' in Fig. 2), Cu-doped ZrNₓ (see 7 in Fig. 1) and Cu-doped Zr oxynitride (see 7" in Fig. 3) to transform into a more dense and less absorbing layer 11 of or including Cu-doped ZrOₓ as shown in Figs. 1-3. Of course, layer 11 may contain small amounts of other materials such as nitrogen, fluorine and/or carbon.

In any of the example embodiments discussed above, one or more of the layers comprising zirconium and copper (e.g., see layers 7, 7', 7" and/or 11) may be doped with fluorine (F) and/or carbon (C). This may be done, for example, by using a gas such as C₂F₆ during sputter-deposition of the layer(s) comprising zirconium. For instance, a layer of Cu:ZrN:F may be formed by sputtering a Zr/Cu target(s) (or a Zr target together with a Cu target) in an atmosphere including a mixture of N₂ and C₂F₆ gases (Ar gas may also be used in certain example instances in addition to N₂ and C₂F₆ gases), and oxygen gas may also be present. When C₂F₆ gas is used in the sputtering atmosphere, the resulting layer 7, 7', 7" comprising Cu-doped zirconium oxide, nitride, and/or oxynitride is typically doped with both F and C since both are present in the gas. Other gases could instead be used. Of course, following heat treatment the layer comprising Cu-doped zirconium oxide 11 may also be doped with F and/or C in a corresponding or similar manner since it was present before HT. This doping of Cu-doped zirconium oxide and/or nitride with F and/or C may be used in conjunction with any embodiment discussed herein. In certain example embodiments of this invention, one or more of layers 7, 7', 7" and/or 11 may be doped with from about 0.01 to 10.0% F, more preferably from about 0.1 to 8.0% F, even more preferably from about 0.3 to 5.0% F, still more preferably from about 0.4 to 2% F, and most preferably from about 0.5 to 1.0% F (in terms of atomic percent). Moreover, in certain example embodiments of this invention, one or more of these layers may be doped with from about 0.01 to 10.0% C, more preferably from about 0.1 to 8.0% C, even more preferably from about 0.3 to 5.0% C, still more preferably from about 0.4 to 2% C, and most preferably from about 0.5 to 1.0% C (in terms of atomic percent). The doping with F and C may be used together so that one or more of these layers is/are doped with both F and C in these amounts. Alternatively, only one of the dopants F and C may be used for a layer. Thus, in such alternative embodiments, one or more of these layers 7, 7', 7" and 11 may be doped with F in the aforesaid amount(s), but not doped with C. As yet another alternative, one or more of these layers may be doped with C in the aforesaid amount(s), but not doped with F.

In certain example embodiments, the layers 7, 7', 7" and 11 may be free of, or substantially free of (no more than 3% of, more preferably no more than 1.0% of, and most preferably no more than 0.5% of) Zn, Sn and W.

Any suitable type of glass substrate 1 may be used in different embodiments of this invention. For example, various types of soda lime silica glass or borosilicate glass may be used for substrate 1. Optionally, the substrate 1 could alternatively be of another ceramic such as quartz.

In certain example embodiments of this invention, the layers 3 and 7 are sputter-deposited on substrate 1. And layer 9 may be ion-beam deposited on the substrate 1, over the layers 3 and 7.

Layers 7, 7, 7" may be sputter-deposited on (directly or indirectly) substrate 1 in any suitable manner. In certain example embodiments, in order to "hide" the copper (or copper oxide/nitride/carbide) in the zirconium oxide and/or nitride based layer 7, 7', 7", the copper and zirconium may be co-sputtered (or sputtered from a mixed, single target, in different instances) in a controlled way according to certain example embodiments. As used herein, "co-sputtered" may refer to substantially simultaneous sputtering from at least two targets, or sequential sputtering from at least two targets. The sputtering target(s) discussed below in the example embodiments can be planar target(s), rotating cylindrical magnetron target(s), or a combination thereof. Metal or ceramic targets may be used.

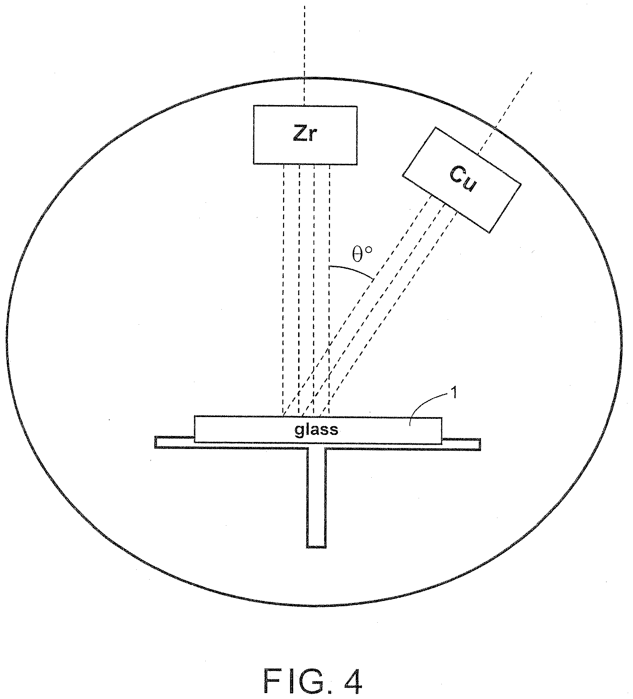

In a first example embodiment shown in Fig. 4, for sputter-depositing layer 7, 7' and/or 7" in any of the Fig. 1-3 embodiments, the Cu is sputtered from a copper target (which may also include oxygen) and the Zr is sputtered from a zirconium target (which may also include oxygen) so that the respective sputtering directions are angled from each other. More specifically, the Zr sputtering direction is substantially perpendicular to the substrate 1, and the Cu sputtering direction is offset by an angle of theta (θ), as shown in Figure 4. This position assists informing a layer 7, 7' and/or 7" with copper, copper oxide, and/or copper nitride "hidden" in a zirconium oxide and/or nitride matrix, and helps maintain the stability of the crystalline formation in the coating after optional heat-treatment. The angle theta (θ), as shown in Figure 4, is from about 0 to about 60 degrees, more preferably from about 10 to about 50 degrees, and most preferably from about 30 to about 45 degrees.

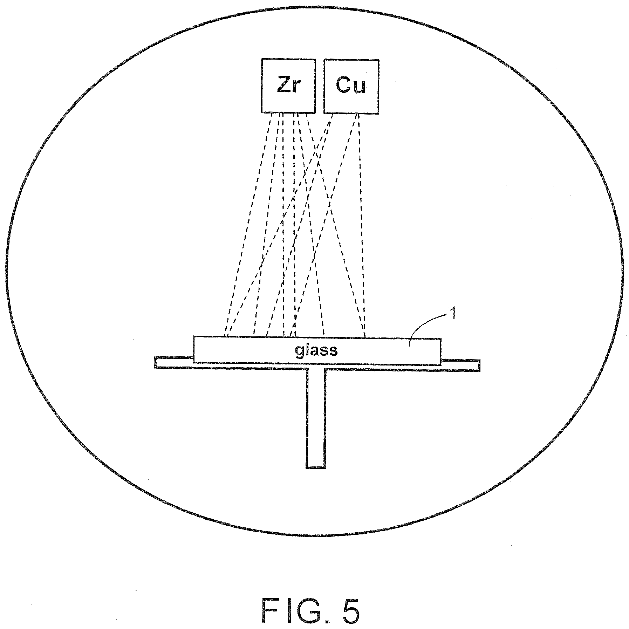

Referring to Fig. 5, in another example embodiment, the layer 7, 7', and/or 7" may be sputter-deposited via power controlled co-sputtering of Cu and Zr inclusive targets. In this embodiment, the Zr and Cu based targets may or may not be substantially parallel, and are sputtered using different powers to control the composition and crystallinity of the layer 7, 7' and/or 7" in a desirable manner.

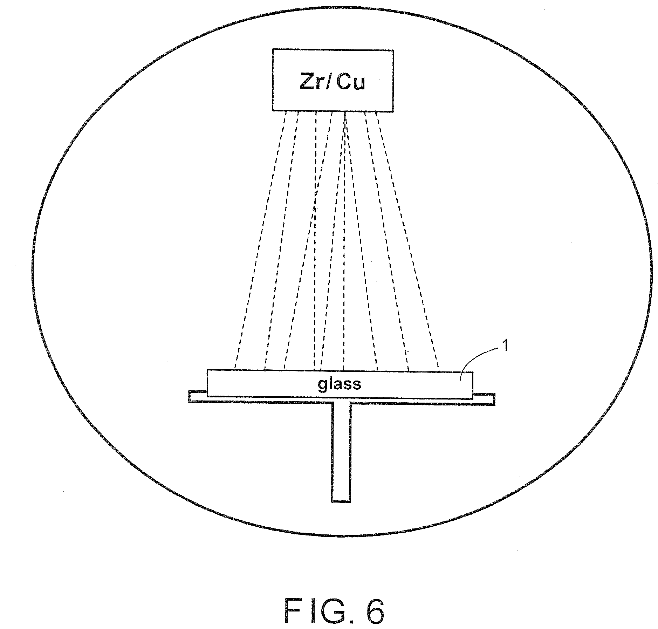

Referring to Fig. 6, in another example embodiment, at least one target is used in depositing layer 7, 7' and/or 7" and that target may include both zirconium and copper (and possibly oxides of each) in a certain ratio which operates to help control the composition and crystallinity of the layer being sputter deposited. For example, the target may contain a zirconium and copper alloy to ensure that each respective element is deposited in the desired amount, and is in substantially crystalline form (or in a formation that is conducive to becoming crystalline upon heat treatment).

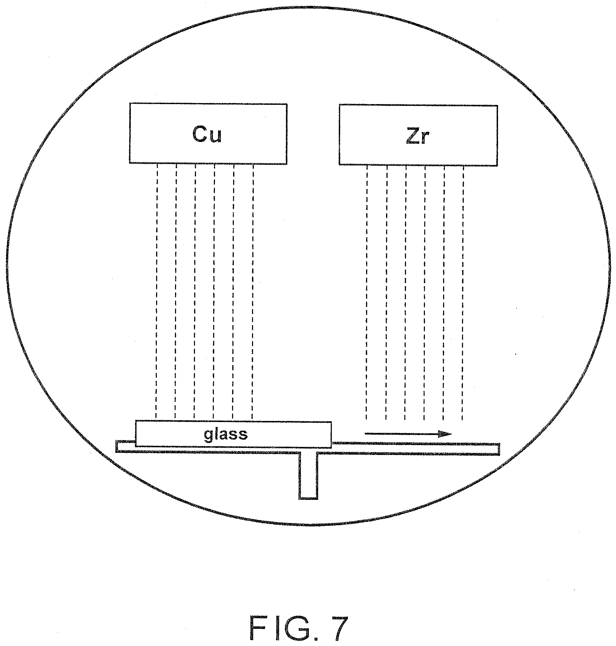

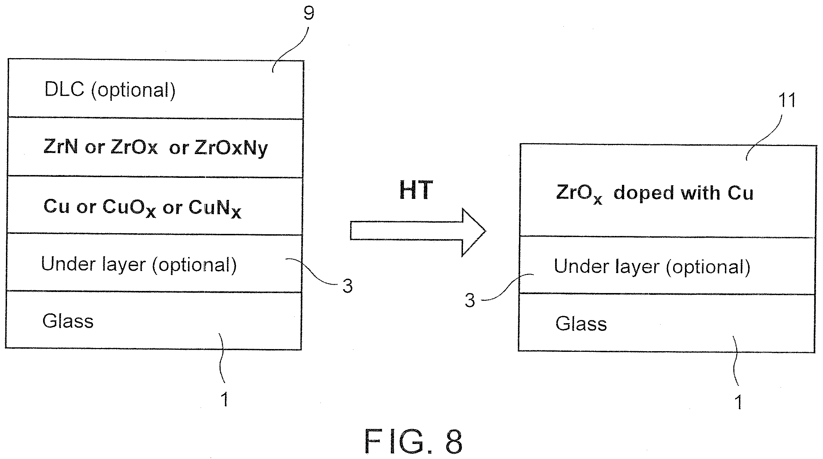

Figs. 7-8 illustrate another example embodiment of this invention, which includes sequential sputtering from separate Cu and Zr based targets (e.g., see Fig. 7). The sputtering technique used in Fig. 7 results in a coated article as shown at the left side of Fig. 8. In this embodiment, thin, alternating layers of or including zirconium (or zirconium oxide, or zirconium nitride, or zirconium oxynitride) and copper (or copper oxide, or copper nitride, or copper oxynitride) are formed on the substrate 1 as shown at the left side of Fig. 8. In this embodiment, the discrete layers are formed prior to HT such as thermal tempering. During HT (e.g., thermal tempering), there can be migration or diffusion between the Cu-based and Zr-based layers. Following HT for example, a layer 11 comprising Cu-doped zirconium oxide 11 may result as shown at the right side of Fig. 8, as described above with respect to any of the other embodiments herein.

Again, in any of the above embodiments, metal or ceramic targets can be used. The targets may be planar targets or rotating cylindrical magnetron sputtering targets, or a combination thereof. The deposition method of Cu-doped zirconium oxide and/or nitride is not limited to the above embodiments. Any deposition method may be used that results in the appropriate structure and composition of the Cu-doped zirconium oxide and/or nitride based layer.

In example embodiments of this invention, there is provided a method of making a heat treated coated article, the method comprising: having a coated article including a coating supported by a glass substrate, the coating comprising a copper-doped layer comprising an oxide and/or nitride of zirconium, and wherein the copper-doped layer is substantially free of tungsten and zinc; and thermally tempering the coated article, including the glass substrate and the copper-doped layer comprising an oxide and/or nitride of zirconium, so that after the tempering a layer comprising copper-doped zirconium oxide is provided on the glass substrate.

In the method of the immediately preceding paragraph, there may be more zirconium than copper in each of (i) the copper-doped layer comprising an oxide and/or nitride of zirconium, and (ii) the layer comprising copper-doped zirconium oxide.

In the method of any of the preceding two paragraphs, a metal content of the layer comprising copper-doped zirconium oxide, may be from about 2-40% copper, more preferably from about 5-15% copper.

In the method of any of the preceding three paragraphs, a metal content of the layer comprising copper-doped zirconium oxide may be from about 51-99% zirconium, more preferably from about 70-95% zirconium, even more preferably from about 85-95% zirconium.

In the method of any of the preceding four paragraphs, the layer comprising copper-doped zirconium oxide may include Cu-doped ZrₓO_{y} where y/x is from about 1.2 to 2.5, more preferably wherein y/x is from about 1.4 to 2.1.

In the method of any of the preceding five paragraphs, the layer comprising copper-doped zirconium oxide may further comprises fluorine and/or carbon.

In the method of any of the preceding six paragraphs, prior to said tempering the copper-doped layer comprising an oxide and/or nitride of zirconium may comprise one or more of copper-doped zirconium oxide, copper-doped zirconium oxynitride, and/or copper-doped zirconium nitride.

In the method of any of the preceding seven paragraphs, prior to the tempering, the coating may further comprise a layer comprising diamond-like carbon located on the glass substrate over at least the copper-doped layer comprising an oxide and/or nitride of zirconium.

In the method of any of the preceding eight paragraphs, prior to and after the tempering, the coating may further comprise a dielectric layer between the glass substrate and the copper-doped layer comprising an oxide and/or nitride of zirconium.

In the method of any of the preceding nine paragraphs, the layer comprising copper-doped zirconium oxide may comprise a cubic lattice structure and/or tetragonal lattice structure.

In the method of any of the preceding ten paragraphs, the layer comprising copper-doped zirconium oxide may be an outermost layer of the coating following tempering.

In the method of any of the preceding eleven paragraphs, the tempered coated article may have a visible transmission of at least 50%.

In the method of any of the preceding twelve paragraphs, the copper-doped layer may be free of tungsten and zinc.

In the method of any of the preceding thirteen paragraphs, the copper-doped layer may optionally not contain any metal other than Cu and Zr.

In certain example embodiments, there is provided a method of making a heat treated coated article, the method comprising: having a coated article including a coating supported by a glass substrate, the coating comprising a copper-doped layer comprising an oxide and/or nitride of zirconium; and heat treating the coated article, including the glass substrate and the copper-doped layer comprising an oxide and/or nitride of zirconium, so that after the heat treating a layer comprising copper-doped zirconium oxide is provided on the glass substrate, and wherein a metal portion of the layer comprising copper-doped zirconium oxide consists essentially of copper and zirconium.

In the method of the immediately preceding paragraph, there may be less copper than zirconium in at least one of (i) the copper-doped layer comprising an oxide and/or nitride of zirconium, and (ii) the layer comprising copper-doped zirconium oxide.

In the method of any of the preceding two paragraphs, a metal content of the layer comprising copper-doped zirconium oxide may be from about 5-30% copper and/or from about 70-95% zirconium.

In certain example embodiments, there is provided a coated article comprising: a glass substrate (which may or may not be thermally tempered); and a layer comprising copper-doped zirconium oxide provided as an outermost layer of a coating provided on the glass substrate, and wherein a metal portion of the layer comprising copper-doped zirconium oxide consists essentially of copper and zirconium.

In the coated article of the immediately preceding paragraph, the coating may consist only of the layer comprising copper-doped zirconium oxide, or a layer comprising silicon oxide and/or silicon nitride may be provided between the glass substrate and the layer comprising copper-doped zirconium oxide.

In the coated article of any of the preceding two paragraphs, the coated article may have a visible transmission of at least about 50%.

In certain example embodiments, there is provided a method of making a heat treated coated article, the method comprising: having a coated article including a coating supported by a glass substrate, the coating comprising a layer comprising copper that directly contacts a layer comprising an oxide and/or nitride of zirconium; and thermally tempering the coated article, including the glass substrate and the layer comprising copper and the layer comprising an oxide and/or nitride of zirconium, so that migration occurs between the layers during said tempering and after the tempering a layer comprising copper-doped zirconium oxide is provided on the glass substrate.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A method of making a heat treated coated article, the method comprising:
having a coated article including a coating supported by a glass substrate (1), the coating comprising a copper-doped layer (7, 7', 7") comprising an oxide and/or nitride of zirconium, and wherein the copper-doped layer (7, 7', 7") is substantially free of tungsten and zinc; and
thermally tempering the coated article, including the glass substrate (1) and the copper-doped layer (7, 7', 7") comprising an oxide and/or nitride of zirconium, so that after the tempering a layer comprising copper-doped zirconium oxide (11) is provided on the glass substrate (1).

2. The method of claim 1, wherein there is more zirconium than copper in each of (i) the copper-doped layer (7, 7', 7") comprising an oxide and/or nitride of zirconium, and (ii) the layer comprising copper-doped zirconium oxide (11).

3. The method of any preceding claim, wherein a metal content of the layer comprising copper-doped zirconium oxide (11) is from about 2-40% copper, more preferably wherein a metal content of the layer comprising copper-doped zirconium oxide (11) is from about 5-15% copper.

4. The method of any preceding claim, wherein a metal content of the layer comprising copper-doped zirconium oxide (11) is from about 51-99% zirconium; preferably wherein
a metal content of the layer comprising copper-doped zirconium oxide (11) is from about 70-95% zirconium.

5. The method of any preceding claim, wherein the layer comprising copper-doped zirconium oxide (11) includes Cu-doped ZrₓO_{y} where y/x is from about 1.2 to 2.5; more preferably wherein y/x is from about 1.4 to 2.1.

6. The method of any preceding claim, wherein prior to said tempering the copper-doped layer (7, 7', 7") comprising an oxide and/or nitride of zirconium comprises copper-doped zirconium oxide; and/or wherein
prior to said tempering the copper-doped layer (7, 7', 7") comprising an oxide and/or nitride of zirconium comprises copper-doped zirconium oxynitride; and/or wherein
prior to said tempering the copper-doped layer (7, 7', 7") comprising an oxide and/or nitride of zirconium comprises copper-doped zirconium nitride.

7. The method of any preceding claim, wherein
prior to the tempering, the coating further comprises a layer comprising diamond-like carbon (9) located on the glass substrate (1) over at least the copper-doped layer (7, 7', 7") comprising an oxide and/or nitride of zirconium.

8. The method of claim 1, wherein a metal portion of the layer comprising copper-doped zirconium oxide (11) consists essentially of copper and zirconium.

9. The method of claim 8, wherein there is less copper than zirconium in at least one of (i) the copper-doped layer (7, 7', 7") comprising an oxide and/or nitride of zirconium, and (ii) the layer comprising copper-doped zirconium oxide (11).

10. The method of claim 1, wherein the coating comprising a layer comprising copper that directly contacts a layer (7, 7', 7") comprising an oxide and/or nitride of zirconium; and
thermally tempering the coated article, including the glass substrate (1) and the layer comprising copper and the layer (7, 7', 7") comprising an oxide and/or nitride of zirconium, so that migration occurs between the layers during said tempering and after the tempering a layer comprising copper-doped zirconium oxide (11) is provided on the glass substrate (1).

11. A coated article comprising:
a glass substrate (1); and
a layer comprising copper-doped zirconium oxide (11) provided as an outermost layer of a coating provided on the glass substrate (1), and wherein a metal portion of the layer comprising copper-doped zirconium oxide (11) consists essentially of copper and zirconium.

12. The coated article of claim 11, wherein the coating consists only of the layer comprising copper-doped zirconium oxide (11).

13. The coated article of any of claims 11-12, wherein the glass substrate (1) is thermally tempered.

14. The coated article of any of claims 11-13, wherein a layer comprising silicon oxide and/or silicon nitride is provided between the glass substrate (1) and the layer comprising copper-doped zirconium oxide (11).

15. The coated article of any of claims 11-14, wherein the coated article has a visible transmission of at least about 50%.

## Patentansprüche

1. Verfahren zum Herstellen eines wärmebehandelten beschichteten Artikels, wobei das Verfahren Folgendes umfasst:
Vorliegen eines beschichteten Artikels, der eine von einem Glassubstrat (1) getragene Beschichtung beinhaltet, wobei die Beschichtung eine kupferdotierte Schicht (7, 7', 7") umfasst, die ein Oxid und/oder Nitrid von Zirconium umfasst, und wobei die kupferdotierte Schicht (7, 7', 7") im Wesentlichen frei von Wolfram und Zink ist; und
thermisches Tempern des beschichteten Artikels, einschließlich des Glassubstrats (1) und der kupferdotierten Schicht (7, 7', 7"), die ein Oxid und/oder Nitrid von Zirconium umfasst, sodass nach dem Tempern eine Schicht umfassend kupferdotiertes Zirconiumoxid (11) auf dem Glassubstrat (1) bereitgestellt wird.

2. Verfahren nach Anspruch 1, wobei mehr Zirconium als Kupfer in jeder von (i) der kupferdotierten Schicht (7, 7', 7"), die ein Oxid und/oder Nitrid von Zirconium umfasst, und (ii) der Schicht, die kupferdotiertes Zirconiumoxid (11) umfasst, vorhanden ist.

3. Verfahren nach einem der vorhergehenden Ansprüche, wobei ein Metallgehalt der Schicht, die kupferdotiertes Zirconiumoxid (11) umfasst, etwa 2 - 40 % Kupfer beträgt, bevorzugter, wobei ein Metallgehalt der Schicht, die kupferdotiertes Zirconiumoxid (11) umfasst, etwa 5 - 15 % Kupfer beträgt.

4. Verfahren nach einem der vorhergehenden Ansprüche, wobei ein Metallgehalt der Schicht, die kupferdotiertes Zirconiumoxid (11) umfasst, etwa 51 - 99 % Zirconium beträgt; wobei vorzugsweise
ein Metallgehalt der Schicht, die kupferdotiertes Zirconiumoxid (11) umfasst, etwa 70 - 95 % Zirconium beträgt.

5. Verfahren nach einem der vorhergehenden Ansprüche, wobei die Schicht, die kupferdotiertes Zirconiumoxid (11) umfasst, Cu-dotiertes ZrₓO_{y} enthält, wobei y/x etwa 1,2 - 2,5 beträgt; wobei bevorzugter y/x etwa 1,4 - 2,1 beträgt.

6. Verfahren nach einem der vorhergehenden Ansprüche, wobei vor dem Tempern die kupferdotierte Schicht (7, 7', 7"), die ein Oxid und/oder Nitrid von Zirconium umfasst, kupferdotiertes Zirconiumoxyd umfasst; und/oder wobei
vor dem Tempern die kupferdotierte Schicht (7, 7', 7"), die ein Oxid und/oder Nitrid von Zirconium umfasst, kupferdotiertes Zirconiumoxynitrid umfasst; und/oder wobei
vor dem Tempern die kupferdotierte Schicht (7, 7', 7"), die ein Oxid und/oder Nitrid von Zirconium umfasst, kupferdotiertes Zirconiumnitrid umfasst.

7. Verfahren nach einem der vorhergehenden Ansprüche, wobei
vor dem Tempern die Beschichtung ferner eine Schicht umfasst, die diamantartigen Kohlenstoff (9) umfasst, der auf dem Glassubstrat (1) über mindestens der kupferdotierten Schicht (7, 7', 7") angeordnet ist, die ein Oxid und/oder Nitrid von Zirconium umfasst.

8. Verfahren nach Anspruch 1, wobei ein Metallgehalt der Schicht, die kupferdotiertes Zirconiumoxid (11) umfasst, im Wesentlichen aus Kupfer und Zirconium besteht.

9. Verfahren nach Anspruch 8, wobei weniger Kupfer als Zirconium in mindestens einer von (i) der kupferdotierten Schicht (7, 7', 7"), die ein Oxid und/oder Nitrid von Zirconium umfasst, und (ii) der Schicht, die kupferdotiertes Zirconiumoxid (11) umfasst, vorhanden ist.

10. Verfahren nach Anspruch 1, wobei die Beschichtung eine Schicht umfasst, die Kupfer umfasst, das direkt mit einer Schicht (7, 7', 7") in Kontakt ist, die ein Oxid und/oder Nitrid von Zirconium umfasst; und
thermisches Tempern des beschichteten Artikels, einschließlich des Glassubstrats (1) und der kupferdotierten Schicht (7, 7', 7"), die ein Oxid und/oder Nitrid von Zirconium umfasst, sodass zwischen den Schichten während des Temperns Migration stattfindet und nach dem Tempern eine Schicht umfassend kupferdotiertes Zirconiumoxid (11) auf dem Glassubstrat (1) bereitgestellt wird.

11. Beschichteter Artikel, umfassend:
ein Glassubstrat (1); und
eine Schicht, die kupferdotiertes Zirconiumoxid (11) umfasst, das als äußerste Schicht einer auf dem Glassubstrat (1) bereitgestellten Beschichtung bereitgestellt wird, und wobei ein Metallabschnitt der Schicht, der kupferdotiertes Zirconiumoxid (11) umfasst, im Wesentlichen aus Kupfer und Zirconium besteht.

12. Beschichteter Artikel nach Anspruch 11, wobei die Beschichtung nur aus der Schicht besteht, die kupferdotiertes Zirconiumoxid (11) umfasst.

13. Beschichteter Artikel nach Anspruch 11 - 12, wobei das Glassubstrat (1) thermisch getempert ist.

14. Beschichteter Artikel nach einem der Ansprüche 11 - 13, wobei eine Schicht, die Siliziumoxid und/oder Siliziumnitrid umfasst, zwischen dem Glassubstrat (1) und der Schicht, die kupferdotiertes Zirconiumoxid (11) umfasst, bereitgestellt wird.

15. Beschichteter Artikel nach einem der Ansprüche 11 - 14, wobei der beschichtete Artikel eine sichtbare Durchlässigkeit von mindestens etwa 50 % aufweist.

## Revendications

1. Procédé de fabrication d'un article revêtu traité thermiquement, le procédé comprenant :
le fait de présenter un article revêtu incluant un revêtement supporté par un substrat en verre (1), le revêtement comprenant une couche dopée au cuivre (7, 7', 7") comprenant un oxyde et/ou un nitrure de zirconium, et dans lequel la couche dopée au cuivre (7, 7', 7") est sensiblement exempte de tungstène et de zinc ; et
une trempe thermique de l'article revêtu, y compris le substrat en verre (1) et la couche dopée au cuivre (7, 7', 7") comprenant un oxyde et/ou un nitrure de zirconium, de sorte qu'après la trempe une couche comprenant de l'oxyde de zirconium dopé au cuivre (11) est prévue sur le substrat en verre (1).

2. Procédé selon la revendication 1, dans lequel il y a plus de zirconium que de cuivre dans chacune de (i) la couche dopée au cuivre (7, 7', 7") comprenant un oxyde et/ou un nitrure de zirconium, et (ii) la couche comprenant de l'oxyde de zirconium dopé au cuivre (11).

3. Procédé selon l'une quelconque des revendications précédentes, dans lequel une teneur en métaux de la couche comprenant de l'oxyde de zirconium dopé au cuivre (11) est comprise entre environ 2 et 40 % de cuivre, plus préférablement dans lequel une teneur en métaux de la couche comprenant de l'oxyde de zirconium dopé au cuivre (11) est comprise entre environ 5 et 15 % de cuivre.

4. Procédé selon l'une quelconque des revendications précédentes, dans lequel une teneur en métaux de la couche comprenant de l'oxyde de zirconium dopé au cuivre (11) est comprise entre environ 51 et 99 % de zirconium ; de préférence dans lequel
une teneur en métaux de la couche comprenant de l'oxyde de zirconium dopé au cuivre (11) est comprise entre environ 70 et 95 % de zirconium.

5. Procédé selon l'une quelconque des revendications précédentes, dans lequel la couche d'oxyde de zirconium dopé au cuivre (11) inclut du ZrₓO_{y} dopé au Cu où y/x est compris entre environ 1,2 et 2,5 ; plus préférablement dans lequel y/x est compris entre environ 1,4 et 2,1.

6. Procédé selon l'une quelconque des revendications précédentes, dans lequel, avant ladite trempe, la couche dopée au cuivre (7, 7', 7") comprenant un oxyde et/ou un nitrure de zirconium comprend de l'oxyde de zirconium dopé au cuivre ; et/ou dans lequel
avant ladite trempe, la couche dopée au cuivre (7, 7', 7") comprenant un oxyde et/ou un nitrure de zirconium comprend de l'oxynitrure de zirconium dopé au cuivre ; et/ou dans lequel
avant ladite trempe, la couche dopée au cuivre (7, 7', 7") comprenant un oxyde et/ou un nitrure de zirconium comprend du nitrure de zirconium dopé au cuivre.

7. Procédé selon l'une quelconque des revendications précédentes, dans lequel :
avant la trempe, le revêtement comprend en outre une couche comprenant du carbone de type diamant (9) situé sur le substrat en verre (1) sur au moins la couche dopée au cuivre (7, 7', 7") comprenant un oxyde et/ou un nitrure de zirconium.

8. Procédé selon la revendication 1, dans lequel une partie métallique de la couche comprenant de l'oxyde de zirconium dopé au cuivre (11) est sensiblement constituée de cuivre et de zirconium.

9. Procédé selon la revendication 8, dans lequel il y a moins de cuivre que de zirconium dans au moins l'une de (i) la couche dopée au cuivre (7, 7', 7") comprenant un oxyde et/ou un nitrure de zirconium, et (ii) la couche comprenant de l'oxyde de zirconium dopé au cuivre (11).

10. Procédé selon la revendication 1, dans lequel le revêtement comprend une couche comprenant du cuivre qui vient directement en contact avec une couche (7, 7', 7") comprenant un oxyde et/ou un nitrure de zirconium ; et
la trempe thermique de l'article revêtu, y compris le substrat en verre (1) et la couche comprenant du cuivre et la couche (7, 7', 7") comprenant un oxyde et/ou un nitrure de zirconium, de sorte que la migration se produit entre les couches pendant ladite trempe et après la trempe d'une couche comprenant de l'oxyde de zirconium dopé au cuivre (11) est prévue sur le substrat en verre (1).

11. Article revêtu comprenant :
un substrat en verre (1) ; et
une couche comprenant de l'oxyde de zirconium dopé au cuivre (11) prévue comme une couche externe d'un revêtement prévu sur le substrat en verre (1), et dans lequel une partie métallique de la couche comprenant de l'oxyde de zirconium dopé au cuivre (11) est sensiblement constituée de cuivre et de zirconium.

12. Article revêtu selon la revendication 11, dans lequel le revêtement est constitué uniquement de la couche comprenant de l'oxyde de zirconium dopé au cuivre (11).

13. Article revêtu selon l'une quelconque des revendications 11 et 12, dans lequel le substrat en verre (1) est trempé thermiquement.

14. Article revêtu selon l'une quelconque des revendications 11 à 13, dans lequel une couche comprenant de l'oxyde de silicium et/ou du nitrure de silicium est disposée entre le substrat en verre (1) et la couche comprenant de l'oxyde de zirconium dopé au cuivre (11).

15. Article revêtu selon l'une quelconque des revendications 11 à 14, dans lequel l'article revêtu présente une transmission dans le visible d'au moins environ 50 %.
